# EUROPÄISCHE PATENTSCHRIFT

(11) **EP 2 117 394 B1**
(45) Veröffentlichungstag und Bekanntmachung des Hinweises auf die Patenterteilung: **01.06.2011**
(21) Anmeldenummer: 08701469.2
(22) Anmeldetag: 15.01.2008
(51) Int. Cl.: A47J 43/08, F16H 7/10

(54) **ZUGMITTELANTRIEB FÜR EIN HAUSHALTSGERÄT**
TRACTION MECHANISM DRIVE FOR A HOUSEHOLD APPLIANCE
ENTRAÎNEMENT À ÉLÉMENT DE TRACTION POUR UN APPAREIL MÉNAGER

(30) Priorität: 01.02.2007 DE 102007005108
(43) Veröffentlichungstag der Anmeldung: 18.11.2009
(73) Patentinhaber: BSH Bosch und Siemens Hausgeräte GmbH, 81739 München (DE)
(72) Erfinder: ZIBRET, Igor, 3327 Smartno ob Paki (SI); PAVLOVIC, Henrik, 3333 Ljubno ob Savinji (SI); MAZEJ, Stanislav, 3303 Gomilsko (SI)
(86) Internationale Anmeldenummer: PCT/EP2008/050356
(87) Internationale Veröffentlichungsnummer: WO 2008/092731

(56) Entgegenhaltungen:
- WO-A-01/96763
- CH-A- 163 084
- GB-A- 1 171 479

## Beschreibung

### Hintergrund der Erfindung

Die vorliegende Erfindung betrifft einen Zugmittelantrieb für ein Haushaltsgerät, insbesondere für eine Küchenmaschine, gemäß dem Oberbegriff des Anspruchs 1. Sie betrifft außerdem eine Küchenmaschine mit dem Zugmittelantrieb.

### Stand der Technik

Aus der deutschen Offenlegungsschrift DE 34 33 004 A1 ist ein Riemenantrieb für ein elektromotorisches Haushaltsgerät bekannt, bei dem eine auf der Welle eines Elektromotors angeordnete Riemenscheibe über einen Riemen mit einer weiteren Riemenscheibe in Antriebsverbindung steht. Zum Spannen des Riemens ist eine am Riemen angreifende Spannscheibe vorgesehen. Die Spannscheibe ist an einem Stellexzenter gelagert, der in einem an einem Gehäuse angeordneten Lagerauge gehalten ist. Das Lagerauge weist eine Rastnase auf, die unter der Vorspannung einer Rastfeder in an der Umfangsfläche des Stellexzenters ausgebildete Rastzähne eingreift. Zum Spannen des Riemens wird der Stellexzenter gedreht, wobei die Rastnase über die Rastzähne ratscht, bis die gewünschte Spannung des Riemens erreicht ist.

Aus dem US-Patent US 5,214,488 ist ein Riemenantrieb für einen digitalen Plotter bekannt, bei dem eine auf der Achse eines Motors angeordnete Riemenscheibe über einen Riemen mit einer zweiten Riemenscheibe in Antriebsverbindung steht. Der Motor ist auf eine Platte montiert, die bezüglich einer anderen, stationären Platte schwenkbar ist, um den Motor zu verschwenken. Die schwenkbare Platte ist bezüglich der stationären Platte in Spannrichtung des Riemens mittels einer Spannfeder vorgespannt. Dadurch, dass die Riemenspannung weitgehend durch die Spannfeder vorgegeben ist, soll eine konstante Riemenspannung sichergestellt werden.

Die CH 163 084 A offenbart eine Kraftübertragungsvorrichtung mit einem innen verzahnten Rotationskörper, der mit einer Vorrichtungswelle über ein Zahnrad in Antriebsverbindung steht. Der Rotationskörper kann beispielsweise als Riemenscheibe ausgebildet sein.

Die DE 693 12 980 T2 offenbart eine Küchenmaschine mit einer antreibbaren Welle, wobei die Küchenmaschine Mittel zur Ausrichtung des Endes der Antriebswelle und eines Werkzeugs aufweist.

Die US 6 705 581 B2 offenbart eine Vorrichtung zum Montieren eines Motors, welche eingerichtet ist einen Riemen mit einer konstanten, vorherbestimmten Spannung anzutreiben.

### Der Erfindung zugrundeliegende Aufgabe

Zugmittelantriebe in Haushaltsgeräten müssen häufig große Drehmomente übertragen, z.B., wenn ein Riemenantrieb bei einer Küchenmaschine ein Knetwerkzeug zum Kneten schweren Teigs betreiben soll. Dies erfordert im Allgemeinen eine hohe Riemenspannung, um ein Durchrutschen des Riemens zu vermeiden. Andererseits kann sich eine hohe Riemenspannung negativ auf die Lebensdauer des Riemens und der Lager der Riemenscheiben auswirken. Außerdem kann ein stark gespannter Riemen ein erhöhtes Laufgeräusch verursachen, was insbesondere im Haushalt häufig unerwünscht ist.

Der Erfindung liegt die Aufgabe zugrunde, einen verbesserten Zugmittelantrieb für ein Haushaltsgerät bereitzustellen, der Nachteile bekannter Zugmittelantriebe vermeidet. Der Erfindung liegt weiter die Aufgabe zugrunde, ein Haushaltsgerät mit einem solchen verbesserten Zugmittelantrieb bereitzustellen.

### Erfindungsgemäße Lösung

Zur Lösung der Aufgabe lehrt die vorliegende Erfindung einen Zugmittelantrieb für ein Haushaltsgerät mit den Merkmalen des Anspruchs 1. Sie lehrt außerdem eine Küchenmaschine mit den Merkmalen des Anspruchs 13.

Es ist ein Aspekt der vorliegenden Erfindung, dass die Kraft, die das Zugmittel spannt, aus der Kraft resultiert, mit der der Riemen lasttrumseitig an die erste Scheibe angreift. Hierdurch kann die Riemenspannung eine Funktion der Belastung des Antriebs sein. Es ist ein erreichbarer Vorteil der vorliegenden Erfindung, dass sich die Riemenspannung selbsttätig an die Belastung des Zugmittelantriebs anpasst. Insbesondere kann erreicht werden, dass das Zugmittel bei geringerer Belastung des Antriebs weniger stark gespannt ist. Durch die Erfindung kann vorteilhaft die Lebensdauer des Riemens und der Scheiben verlängert und die Lärmbelastung gesenkt werden.

### Bevorzugte Ausgestaltungen der Erfindung

Vorteilhafte Aus- und Weiterbildungen, welche einzeln oder in Kombination miteinander eingesetzt werden können, sind Gegenstand der abhängigen Ansprüche. Bei einer bevorzugten Ausführung der Erfindung sind die Scheiben kreisförmig. Die Welle verläuft vorzugsweise durch den Mittelpunkt der ersten Scheibe und ist mit dieser besonders vorzugsweise drehfest verbunden. Das Zugmittel verbindet die Scheiben vorzugsweise in offener Umschlingung, es sind aber auch Ausführungen der Erfindung mit gekreuzter Umschlingung denkbar.

Vorzugsweise ist der Abstand zwischen Welle und Schwenkachse kleiner als der Radius der ersten Scheibe. Die Schwenkachse liegt vorzugsweise lasttrumseitig bezüglich der Welle. So kann vorteilhaft erreicht werden, dass eine zur zweiten Schreibe hin gerichtete lasttrumseitige Kraft an der ersten Scheibe in eine von der zweiten Scheibe weg gerichtete Kraft auf die Scheibe 2 umgesetzt werden kann, um das Zugmittel zu spannen.

Ein bevorzugter Zugmittelantrieb ist ein Riemenantrieb mit einem Riemen als Zugmittel und Riemenscheiben als erste und zweite Scheiben. Der Riemen ist vorzugsweise ein Zahnriemen, und die Riemenscheiben sind vozugsweise Zahnräder. Es ist ein erreichbarer Vorteil dieser Ausführung der Erfindung, dass sie eine formschlüssige Kraftübertragung ermöglicht, was einem Durchrutschen des Riemens entgegenwirken kann. Es sind aber auch Ausführungen der Erfindung mit einem kraftschlüssigen Riemenantrieb denkbar, bei denen das Drehmoment durch die an der Kontaktfläche zwischen Riemen und Riemenscheibe wirkenden Reibkräfte übertragen wird. Als Zugmittel eines kraftschlüssigen Riemenantriebs kommen z.B. Flachriemen oder Keilriemen in Frage.

Vorzugsweise ist die erste Scheibe eine Antriebsscheibe und die Welle eine Antriebswelle, die die Antriebsscheibe antreibt. Die zweite Scheibe ist vorzugsweise eine Abtriebsscheibe. Ein besonders bevorzugter Zugmittelantrieb umfasst genau zwei Scheiben, eine Antriebsscheibe und eine Abtriebsscheibe. Es sind aber auch andere Ausführungen der Erfindung denkbar, z.B. solche mit zwei oder mehr Abtriebsscheiben, insbesondere, um mehrere Werkzeuge anzutreiben. Es sind auch Zugmittelantriebe denkbar, bei denen eine zusätzliche Spannscheibe vorgesehen ist, die an das Zugmittel angreift.

Die Abtriebsscheibe eines bevorzugten Zugmittelantriebs ist größer als die Antriebsscheibe. Auf diese Weise kann vorteilhafterweise ein Übersetzungsfaktor kleiner als 1 erreicht werden (Untersetzung). Dies kann insbesondere von Vorteil sein, wenn abtriebsseitig ein großes Drehmoment bereitgestellt werden soll, z.B. zum Betreiben eines Knetwerkzeugs bei einer Küchenmaschine. Der Übersetzungsfaktor liegt vorzugsweise zwischen 1/2 und 1/20, besonders vorzugsweise zwischen 1/5 und 1/10, besonders vorzugsweise bei ca. 1/5.

Bei einem bevorzugten Zugmittelantrieb treibt die Abtriebsscheibe eine weitere Abtriebsscheibe an. Besonders vorzugsweise ist die Abtriebsscheibe dazu mit einer Verzahnung, besonders vorzugsweise einem Zahnkranz mit einer Innenverzahnung, ausgestattet, in die eine Verzahnung der weiteren Abtriebsscheibe eingreift. Die weitere Abtriebsscheibe ist dazu vorzugsweise innerhalb der sie antreibenden Abtriebsscheibe angeordnet. Die weitere Abtriebsscheibe ist vorzugsweise kleiner als die sie antreibende Abtriebsscheibe. Auf diese Weise kann vorteilhaft eine Übersetzung erreicht werden. Dies kann insbesondere von Vorteil sein, wenn abtriebsseitig eine hohe Drehgeschwindigkeit bereitgestellt werden soll, z.B. zum Betreiben eines Mixers bei einer Küchenmaschine. Der Übersetzungsfaktor liegt vorzugsweise zwischen 2 und 20, besonders vorzugsweise zwischen 5 und 10, besonders vorzugsweise bei ca. 5.

Ein bevorzugter Zugmittelantrieb umfasst einen Motor zum Antreiben der Antriebswelle, vorzugsweise einen Elektromotor. Vorzugsweise ist der Motor gemeinsam mit der Antriebswelle um die Schwenkachse schwenkbar. Besonders vorzugsweise ist die Motorwelle die Antriebswelle derart, dass die Antriebsscheibe auf der Motorwelle aufsitzt. Diese Ausführung der Erfindung ermöglicht vorteilhafterweise eine besonders einfache Konstruktion des erfindungsgemäßen Zugmittelantriebs, bei der das Verschwenken der Antriebswelle durch ein Verschwenken des Motors realisiert wird.

Bei einer bevorzugten Ausführung der Erfindung ist die Welle exzentrisch auf einem kreisförmigen Drehteller gelagert. Der Drehteller ist vorzugsweise in einem hohlen Kreiszylinder derart gelagert, dass die gemeinsame Mittelachse des Drehtellers und des Kreiszylinders die Schwenkachse bilden und die Welle durch Drehen des Drehtellers in dem hohlen Kreiszylinder um die Schwenkachse schwenkbar ist. Vorzugsweise ist der Motor fest mit dem Drehteller verbunden, so dass der Motor und mit ihm die Antriebswelle durch Drehen des Drehtellers um die Schwenkachse schwenkbar ist. Dies ermöglicht eine besonders einfache Konstruktion, bei der im Wesentlichen die gesamte Antriebsseite mit Motor, Antriebswelle und Antriebsscheibe auf dem Drehteller in dem hohlen Kreiszylinder gelagert ist. Die Welle ist vorzugsweise zwischen 1 bis 20 mm, besonders vorzugsweise 5 bis 10 mm, exzentrisch zur Schwenkachse angeordnet.

Bei einem bevorzugten Zugmittelantrieb ist außerdem ein erstes Begrenzungsmittel vorgesehen, das die Schwenkbewegung der Welle um die Schwenkachse in Spannrichtung begrenzt. Auf diese Weise kann vorteilhaft eine maximale Riemenspannung festgelegt werden. Das bevorzugte Begrenzungsmittel umfasst einen Vorsprung am Drehteller, der an ein Anschlagmittel, das vorzugsweise am Gehäuse angeordnet ist, anschlagen kann, um die Drehbewegung des Drehtellers zu begrenzen. Ein bevorzugtes Anschlagmittel ist ein Vorsprung auf der Innenseite des Gehäuses.

Ein bevorzugter Zugmittelantrieb umfasst ein zweites Begrenzungsmittel, das die Schwenkbewegung der Welle um die Schwenkachse entgegen der Spannrichtung begrenzt. Auf diese Weise kann vorteilhaft eine minimale Riemenspannung festgelegt werden. Das Begrenzungsmittel umfasst vorzugsweise einen Vorsprung am Drehteller, der an ein Anschlagmittel, vorzugsweise am Gehäuse, anschlagen kann, um die Drehbewegung des Drehtellers zu begrenzen. In einer besonders bevorzugten Ausführung der Erfindung ist sowohl ein Begrenzungsmittel zum Begrenzen der Schwenkbewegung in Spannrichtung als auch eines zum Begrenzen der Schwenkbewegung entgegen der Spannrichtung vorgesehen. Der Winkelbereich, in dem die Antriebsachse geschwenkt werden kann, beträgt vorzugsweise zwischen 5 und 30, besonders vorzugsweise zwischen 10 und 20, besonders vorzugsweise ca. 15° (bezüglich eines Vollwinkels von 360°).

Der erfindungsgemäße Zugmittelantrieb umfasst vorzugsweise ein Vorspannmittel, um die Welle bezüglich der Schwenkachse entgegen der Spannrichtung vorzuspannen. Es ist ein erreichbarer Vorteil dieser Ausführung der Erfindung, dass der Drehteller bei Nachlassen der Belastung des Zugmittelantriebs zurückgeführt werden kann, um das Zugmittel zu entspannen. Es ist ein weiterer erreichbarer Vorteil dieser Ausführung, dass die Riemenspannung beeinflusst werden kann. Es sind auch Ausführungen der Erfindung denkbar, bei denen ein Vorspannmittel die Welle in Spannrichtung des Zugmittels vorspannt. Das bevorzugte Spannmittel ist eine Feder, besonders vorzugsweise eine Schraubenfeder, deren eines Ende an dem Drehteller angreift und deren anderes Ende am Gehäuse festgelegt ist.

### Kurzbeschreibung der Zeichnungen

Die Erfindung wird im Folgenden anhand schematischer Zeichnungen an einem Ausführungsbeispiel in weiteren Einzelheiten näher erläutert.

Es zeigen:
- Fig. 1:: einen Querschnitt durch die Zugmittelebene eines erfindungsgemäßen Zugmittelantriebs;
- Fig. 2:: eine vergrößerte Ansicht der Antriebsseite des Zugmittelantriebs der Fig.1, bei dem der Lastarm und der Kraftarm des Hebels und die daran wirkenden Kräfte angegeben sind; und
- Fig. 3: eine perspektivische Ansicht der Antriebs- und Abtriebsseite eines erfindungsgemäßen Zugmittelantriebs.

### Ausführliche Beschreibung eines Ausführungsbeispiels

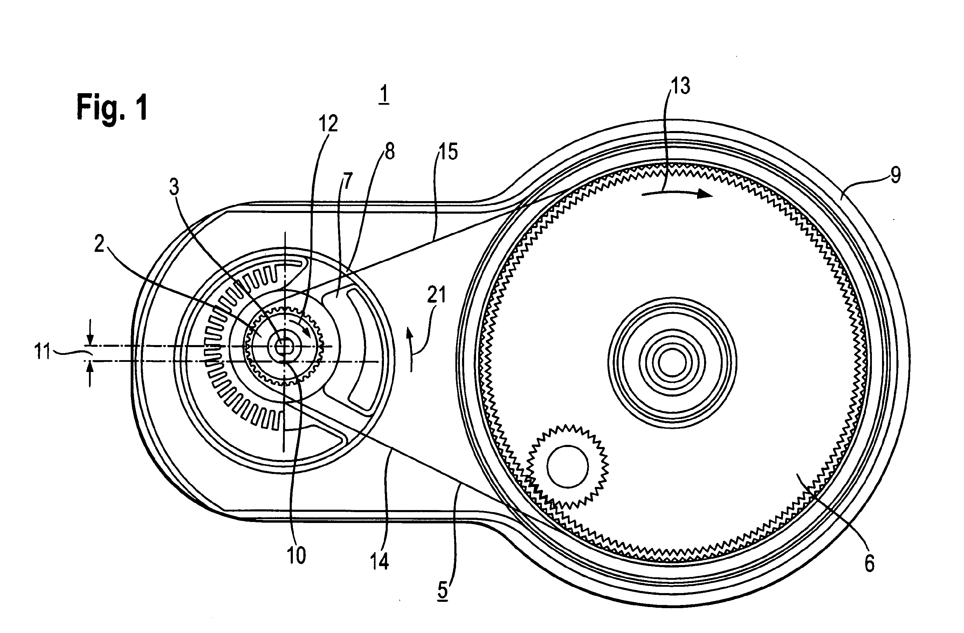

Der in Fig. 1 dargestellte Zugmittelantrieb 1 einer Küchenmaschine umfasst antriebsseitig ein Zahnrad 2, das auf der Motorwelle 3 eines Antriebsmotors 4 drehfest angeordnet ist. Das antriebsseitige Zahnrad 2 steht über einen Zahnriemen 5, der zur Vereinfachung in Figur 1 nur als Linie dargestellt ist, mit einem abtriebsseitigen Zahnrad 6 zum Antreiben eines Werkzeugs der Küchenmaschine in Antriebsverbindung. Das Übersetzungsverhältnis zwischen abtriebsseitigem 2 und abtriebsseitigem Zahnrad 6 beträgt ca. 1/5. Der Motor 4 mit der Motorwelle 3 und dem antriebsseitigen Zahnrad 2 ist fest auf einen Drehteller 7 montiert, der in einem Hohlzylinder 8 drehbar gelagert ist. Der Hohlzylinder 8 ist einstückig mit einem Bodenelement 9 der Küchenmaschine verbunden.

Die Motorwelle 3 ist bezüglich der gemeinsamen Mittelachse 10 des Drehtellers 7 und des Hohlzylinders 8 um eine Strecke 11 exzentrisch gelagert, die kleiner ist als der Radius des antriebsseitigen Zahnrads 2. Durch Drehen des Drehtellers 9 wird der Motor und mit ihm die Motorwelle 3 und das Zahnrad 2 um die Mittelaches 10 als Schwenkachse geschwenkt.

Das antriebsseitige Zahnrad 2 wird von dem Motor 4 in einer Drehrichtung 12 im Uhrzeigersinn angetrieben, so dass das abtriebsseitige Zahnrad 6 durch den Zahnriemen 5 in eine Drehrichtung 13 im Uhrzeigersinn angetrieben wird. Entsprechend weist der Zahnriemen 5 einen Lasttrum 14 (ziehenden Trum) und einen Leertrum 15 (gezogenen Trum) auf. Das antriebsseitige Zahnrad 2 zieht an dem Lasttrum 14 und überträgt so ein Drehmoment auf das abtriebsseitige Zahnrad 6.

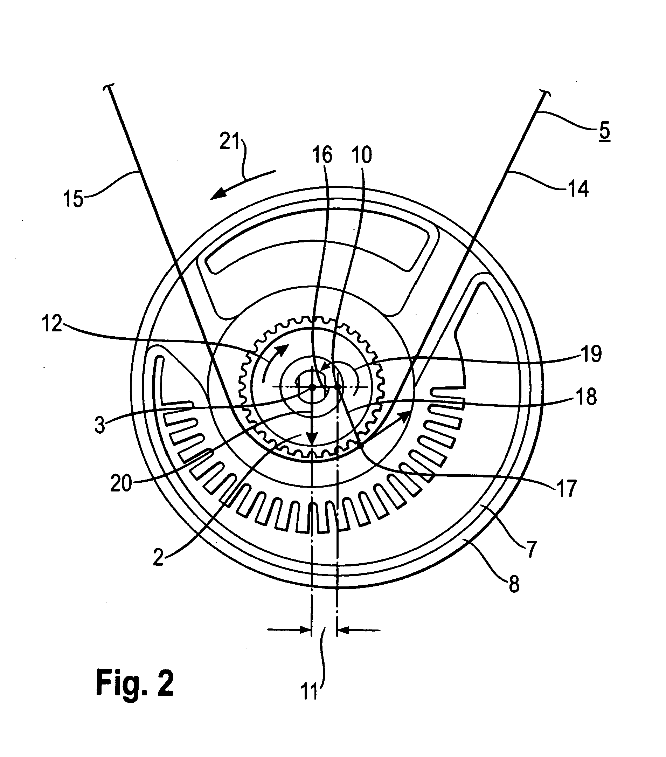

Fig. 2 zeigt im Detail die auf der Antriebsseite wirkenden Kräfte. Die Mittelachse 10 des Drehtellers 7 und des Hohlzylinders 8 liegt lasttrumseitig bezüglich der Welle 3. Sie ist der Drehpunkt eines Hebels, dessen Lastarm 16 die Strecke von der Mittelachse 10 zur Motorwelle 3 bildet. Durch die Strecke von der Schwenkachse 10 zu einem Punkt 17, an dem der Riemen 5 lasttrumseitig an das Antriebszahnrad 2 angreift, wird der Kraftarm 18 des Hebels gebildet. Dadurch, dass das antriebsseitige Zahnrad 2 über den Lasttrum 14 das abtriebsseitige Zahnrad antreibt, greift am Ansatzpunkt 17 des Lasttrums 14 am antriebsseitigen Zahnrad 2 eine tangentiale Kraft an, die abhängig von der Last des abtriebsseitigen Zahnrads 6 ist. Bezüglich der Mittelachse 10, dem Drehpunkt des Hebels 3, 10, 17 entspricht diese kraftarmseitige Kraft einem Drehmoment (angedeutet durch den Pfeil 19), das lastarmseitig an der Motorwelle 3 in eine Kraft 20 resultiert, die den Drehteller Drehtellers 7 in Drehrichtung 21 drehen kann. Durch die Drehung des Drehtellers kann die Welle 3 bezüglich der Mittelachse 10 in Spannrichtung verschwenkt werden. Kraftarm 18 und Lastarm 16 sind bezüglich der Mittelachse 10 so angeordnet, dass die Drehung in ein Verschwenken der Welle 3 in Spannrichtung verursacht. Die Spannrichtung ist die Richtung, in die das Zahnrad 2 bewegt werden muss, um den Riemen zu spannen. Vorliegend zeigt die Spannrichtung von dem von dem abtriebsseitigen Zahnrad 6 weg.

Dadurch, dass die Kraft 20, die den Antriebsriemen spannt, aus der Kraft, die aufgrund der Last des abtriebsseitigen Zahnrads 6 an das antriebsseitige Zahnrand 2 angreift, resultiert, kann sich die Riemenspannung 20 selbsttätig an die Belastung des Zugmittelantriebs anpassen. Bei geringerer Belastung des Antriebs ist der Riemen 5 weniger stark gespannt, bei höher Belastung spannt er sich stärker.

Außerdem ist der Drehteller 7 mit einem Vorsprung 22 versehen, der an Vorsprünge 23 und 24 anschlagen kann, die mit dem Gehäuse einstückig verbunden sind, um den Winkel, in dem der Drehteller 7 in dem Hohlzylinder 8 drehbar und damit die Motorwelle 3 verschwenkbar ist, auf ca. 15° zu begrenzen. Auf diese Weise wird eine minimale Riemenspannung festgelegt, bei der der Riemen 5 immer noch fest genug sitzt, um nicht zu flattern, und eine maximale Riemenspannung, bei der das Getriebe, insbesondere der Riemen 5 und die Lager, nicht überlastet wird.

Weiterhin spannt eine Schraubenfeder 25, deren eines Ende an dem Drehteller 7 und dessen anderes Ende am Bodenelement 9 festgelegt ist, den Drehteller 7 entgegen der Richtung 21 vor. Die Schraubenfeder 25 kann die Motorwelle 6 bei Entlastung des Zugmittelantriebs 1 entgegen der Spannrichtung zurückführen, um den Riemen 5 zu entlasten. Außerdem legt sie zusammen mit dem Verhältnis der Hebelarme 16, 18 des oben beschriebenen Hebels 3, 10, 17 das Verhältnis zwischen Last und spannender Kraft 20 fest.

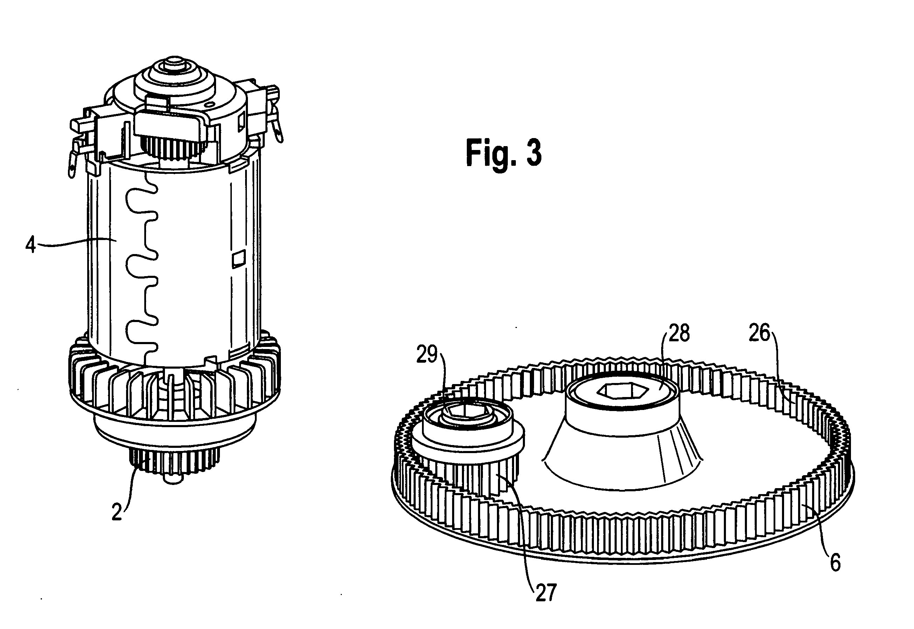

Wie in Figuren 1 und 3 erkennbar, ist das abtriebsseitige Zahnrad 6 außerdem mit einer Innenverzahnung 26 ausgestattet, die in ein in dem abtriebsseitigen Zahnrad 6 angeordnetes weiteres Zahnrad 27 eingreift, um dieses anzutreiben. Das weitere Zahnrad 27 kann ein weiteres Werkzeug, vorzugsweise ein Mixwerkzeug, antreiben. Das Übersetzungsverhältnis zwischen den abtriebsseitigen Zahnrädern 6 und 27 beträgt ungefähr 1 zu 5, das heißt, das weitere Zahnrad 26 dreht sich ungefähr mit der gleichen Geschwindigkeit wie das antriebsseitige Zahnrad 2. Zum Ankuppeln der Werkzeuge sind beide abtriebsseitigen Zahnräder 26, 27 mit Kupplungseinrichtungen 28, 29 ausgestattet.

Durch die Erfindung kann vorteilhafterweise die Lebensdauer des Riemens und der Scheiben verlängert und die Lärmbelastung gesenkt werden.
Die in der vorstehenden Beschreibung, den Ansprüchen und den Zeichnungen offenbarten Merkmale können sowohl einzeln als auch in beliebiger Kombination für die Verwirklichung der Erfindung in ihren verschiedenen Ausgestaltungen von Bedeutung sein.

## Patentansprüche

1. Zugmittelantrieb (1) für ein Haushaltsgerät, insbesondere eine Küchenmaschine, der umfasst: eine erste Scheibe (2), die mit einer Welle (3) drehfest verbunden ist, und eine zweite Scheibe (6), die mit der ersten Scheibe (2) über ein die beiden Scheiben (2, 6) umschlingendes Zugmittel (5) in Antriebsverbindung steht, wobei die Welle (3) um eine zu ihr im Wesentlichen parallele und von ihr beabstandete Schwenkachse (10) in eine Spannrichtung, in der sie das Zugmittel (5) spannt, schwenkbar ist, **dadurch gekennzeichnet, dass** ein Strecke von der Schwenkachse (10) zur Welle (3) den Lastarm (16) eines Hebels bildet und eine Strecke von der Schwenkachse (10) zu einem Punkt (17), an dem das Zugmittel (5) lasttrumseitig an die erste Scheibe (2) angreift, den Kraftarm (18) eines Hebels bildet, wobei das Zugmittel (5) so an den Kraftarm (18) angreift, dass er auf die erste Scheibe (2) bezüglich der Schwenkachse ein Drehmoment (19) ausübt, das am Lastarm (16) in eine Kraft (20) in Spannrichtung resultiert.

2. Zugmittelantrieb (1) nach Anspruch 1, **dadurch gekennzeichnet, dass** der Abstand (11) zwischen der Welle (3) und der Schwenkachse (10) kleiner ist als der Radius der ersten Scheibe (2) und die Schwenkachse (2) lasttrumseitig bezüglich der Welle (3) liegt.

3. Zugmittelantrieb (1) nach einem der vorherigen Ansprüche, **dadurch gekennzeichnet, dass** der Zugmittelantrieb (1) ein Riemenantrieb, das Zugmittel (5) ein Riemen und die erste (2) und die zweite Scheibe (6) Riemenscheiben sind.

4. Zugmittelantrieb (1) nach einem der vorherigen Ansprüche, **dadurch gekennzeichnet, dass** die erste Scheibe (2) eine Antriebsscheibe und die Welle (3) eine Antriebswelle ist, die die Antriebsscheibe (2) antreibt, und die zweite Scheibe (6) eine Abtriebsscheibe ist.

5. Zugmittelantrieb (1) nach Anspruch 4, **dadurch gekennzeichnet, dass** der Zugmittelantrieb (1) genau zwei Scheiben, eine Antriebsscheibe (2) und eine Abtriebsscheibe (6), umfasst.

6. Zugmittelantrieb (1) nach Anspruch 4 oder 5, **dadurch gekennzeichnet, dass** die Abriebsscheibe (6) größer ist als die Antriebsscheibe (2).

7. Zugmittelantrieb (1) nach Anspruch 4 oder 5, **dadurch gekennzeichnet, dass** die Abriebsscheibe (6) eine weitere Abtriebsscheibe antreibt.

8. Zugmittelantrieb (1) nach einem der Ansprüche 4 bis 7, **dadurch gekennzeichnet, dass** er außerdem einem Motor (4) zum Antreiben der Antriebswelle (3) umfasst und der Motor (4) und die Welle (3) gemeinsam um die Schwenkachse (10) schwenkbar sind.

9. Zugmittelantrieb (1) nach einem der vorherigen Ansprüche, **dadurch gekennzeichnet, dass** die Welle (3) exzentrisch auf einem kreisförmigen Drehteller (7) gelagert ist, der in einem hohlen Kreiszylinder (8) drehbar gelagert ist, sodass die gemeinsame Mittelachse (10) des Drehtellers (7) und des Kreiszylinders (8) die Schwenkachse (10) bilden und die Welle (3) durch Drehen des Drehtellers (7) in dem hohlen Kreiszylinder (8) um die Schwenkachse (10) schwenkbar ist.

10. Zugmittelantrieb (1) nach einem der vorherigen Ansprüche, **dadurch gekennzeichnet, dass** sie ein erstes Begrenzungsmittel (22, 23) umfasst, das die Schwenkbewegung der Welle (3) um die Schwenkachse (10) in Spannrichtung begrenzt.

11. Zugmittelantrieb (1) nach einem der vorherigen Ansprüche, **dadurch gekennzeichnet, dass** sie ein zweites Begrenzungsmittel (22, 24) umfasst, dass die Schwenkbewegung der Welle (3) um die Schwenkachse (10) entgegen der Spannrichtung begrenzt.

12. Zugmittelantrieb (1) nach einem der vorherigen Ansprüche, **dadurch gekennzeichnet, dass** er ein Vorspannmittel (25) umfasst, um die Welle bezüglich der Schwenkachse (10) entgegen der Spannrichtung vorzuspannen.

13. Küchenmaschine mit einem Zugmittelantrieb (1) nach einem der vorherigen Ansprüche.

## Claims

1. Traction means drive (1) for a domestic appliance, particularly a food processor, which comprises: a first pulley (2), which is connected with a shaft (3) to be secure against rotation relative thereto, and a second pulley (6), which is disposed in drive connection with the first pulley (2) by way of a traction means (5) looping around the two pulleys (2, 6), wherein the shaft (3) is pivotable about a pivot axis (10), which is substantially parallel thereto and spaced therefrom, in a tensioning direction in which it tensions the traction means (5), **characterised in that** a length from the pivot axis (10) to the shaft (3) forms the work arm (16) of a lever and a length from the pivot axis (10) to a point (17) at which the traction means (5) engages the first pulley (2) at the side of the load run forms the power arm (18) of a lever, wherein the traction means (5) so engages the power arm (18) that it exerts on the first pulley (2) with respect to the pivot axis a torque (19) which results in a force (20) at the work arm (16) in tensioning direction.

2. Traction means drive (1) according to claim 1, **characterised in that** the spacing (11) between the shaft (3) and the pivot axis (10) is smaller than the radius of the first pulley (2) and the pivot axis (2) lies at the load run side with respect to the shaft (3).

3. Traction means drive (1) according to one of the preceding claims, **characterised in that** the traction means drive (1) is a belt drive, the traction means (5) is a belt and the first pulley (2) and the second pulley (2) and the second pulley (6) are belt pulleys.

4. Traction means drive (1) according to any one of the preceding claims, **characterised in that** the first pulley (2) is a drive pulley and the shaft (3) is a drive shaft, which drives the drive pulley (2), and the second pulley (6) is a drive output pulley.

5. Traction means drive (1) according to claim 4, **characterised in that** the traction means drive (1) comprises exactly two pulleys, i.e. a drive pulley (2) and a drive output pulley (6).

6. Traction means drive (1) according to claim 4 or 5, **characterised in that** the drive output pulley (6) is larger than the drive pulley (2).

7. Traction means pulley (1) according to claim 4 or 5, **characterised in that** drive output pulley (6) drives a further drive output pulley.

8. Traction means drive (1) according to any one of claims 4 to 7, **characterised in that** it additionally comprises a motor (4) for driving the drive shaft (3) and the motor (4) and the shaft (3) are pivotable together about the pivot axis (10).

9. Traction means drive (1) according to any one of the preceding claims, **characterised in that** the shaft (3) is eccentrically mounted on a circular turntable (7) which is rotatably mounted in a hollow circular cylinder (8) so that the common centre axis (10) of the turntable (7) and the circular cylinder (8) form the pivot axis (10) and the shaft (3) is pivotable about the pivot axis (10) by rotation of the turntable (7) in the hollow circular cylinder (8).

10. Traction means drive (1) according to any one of the preceding claims, **characterised in that** it comprises a first limiter means (22, 23) which limits the pivot movement of the shaft (3) about the pivot axis (10) in tensioning direction.

11. Traction means drive (1) according to any one of the preceding claims, **characterised in that** it comprises a second limiter means (22, 24) which limits the pivot movement of the shaft (3) about the pivot axis (10) oppositely to the tensioning direction.

12. Traction means drive (1) according to any one of the preceding claims, **characterised in that** it comprises a biasing means (25) in order to bias the shaft with respect to the pivot axis (10) oppositely to the tensioning direction.

13. Food processor with a traction means drive (1) according to any one of the preceding claims.

## Revendications

1. Entraînement à élément de traction (1) pour un appareil électroménager, notamment un robot ménager, qui comprend : un premier disque (2) qui est raccordé à un arbre (3) de manière résistante à la torsion, et un second disque (6) qui est en liaison d'entraînement avec le premier disque (2) par l'intermédiaire d'un élément de traction (5) entourant les deux disques (2, 6), l'arbre (3) étant pivotant autour d'un axe de pivotement (10) qui lui est essentiellement parallèle et éloigné de lui dans une direction de serrage dans laquelle il serre l'élément de traction (5), **caractérisé en ce qu'**un trajet allant de l'axe de pivotement (10) vers l'arbre (3) forme le bras de charge (16) d'un levier et **en ce qu'**un trajet allant de l'axe de pivotement (10) vers un point (17), auquel l'élément de traction (5) a prise sur le premier disque (2) côté brin chargé, forme le bras de la puissance (18) d'un levier, l'élément de traction (5) ayant prise sur le bras de la puissance (18) de manière à ce qu'il exerce un couple de torsion (19) sur le premier disque (2) par rapport à l'axe de pivotement, lequel couple résulte sur le bras de charge (16) en une force (20) en direction de serrage.

2. Entraînement à élément de traction (1) selon la revendication 1, **caractérisé en ce que** l'écart (11) entre l'arbre (3) et l'axe de pivotement (10) est plus petit que le rayon du premier disque (2) et **en ce que** l'axe de pivotement (2) est situé côté brin chargé par rapport à l'arbre (3).

3. Entraînement à élément de traction (1) selon l'une quelconque des revendications précédentes, **caractérisé en ce que** l'entraînement à élément de traction (1) est un entraînement à courroie, **en ce que** l'élément de traction (5) est une courroie et **en ce que** le premier disque (2) et le second disque (6) sont des disques de commande.

4. Entraînement à élément de traction (1) selon l'une quelconque des revendications précédentes, **caractérisé en ce que** le premier disque (2) est un disque d'entraînement et **en ce que** l'arbre (3) est un arbre d'entraînement qui entraîne le disque d'entraînement (2), et **en ce que** le second disque (6) est un disque entraîné.

5. Entraînement à élément de traction (1) selon la revendication 4, **caractérisé en ce que** l'entraînement à élément de traction (1) comprend exactement deux disques, un disque d'entraînement (2) et un disque entraîné (6).

6. Entraînement à élément de traction (1) selon la revendication 4 ou 5, **caractérisé en ce que** le disque entraîné (6) est plus grand que le disque d'entraînement (2).

7. Entraînement à élément de traction (1) selon la revendication 4 ou 5, **caractérisé en ce que** le disque entraîné (6) entraîne un disque entraîné supplémentaire.

8. Entraînement à élément de traction (1) selon l'une quelconque des revendications 4 à 7, **caractérisé en ce qu'**il comprend en outre un moteur (4) destiné à entraîner l'arbre d'entraînement (3) et **en ce que** le moteur (4) et l'arbre (3) sont pivotants en commun autour de l'axe de pivotement (10).

9. Entraînement à élément de traction (1) selon l'une quelconque des revendications précédentes, **caractérisé en ce que** l'arbre (3) est logé de manière excentrique sur un plateau tournant circulaire (7) qui est logé de manière rotative dans un cylindre circulaire creux (8) de sorte que l'axe médian commun (10) du plateau tournant (7) et du cylindre circulaire (8) forme l'axe de pivotement (10) et **en ce que** l'arbre (3) est pivotant autour de l'axe de pivotement (10) par rotation du plateau tournant (7) dans le cylindre circulaire creux (8).

10. Entraînement à élément de traction (1) selon l'une quelconque des revendications précédentes, **caractérisé en ce qu'**il comprend un premier moyen de limitation (22, 23) qui limite le mouvement de pivotement de l'arbre (3) autour de l'axe de pivotement (10) en direction de serrage.

11. Entraînement à élément de traction (1) selon l'une quelconque des revendications précédentes, **caractérisé en ce qu'**il comprend un second moyen de limitation (22, 24) qui limite le mouvement de pivotement de l'arbre (3) autour de l'axe de pivotement (10) en direction de serrage inverse.

12. Entraînement à élément de traction (1) selon l'une quelconque des revendications précédentes, **caractérisé en ce qu'**il comprend un moyen de précontrainte (25) afin de précontraindre l'arbre en direction de serrage inverse par rapport à l'axe de pivotement (10).

13. Robot ménager comprenant un entraînement à élément de traction (1) selon l'une quelconque des revendications précédentes.
